Europäisches Patentamt

European Patent Office

Office européen des brevets

(11) Veröffentlichungsnummer: **0 195 309 B1**

(12) **EUROPÄISCHE PATENTSCHRIFT**

(45) Veröffentlichungstag der Patentschrift: **15.12.93**

(21) Anmeldenummer: **86102844.7**

(22) Anmeldetag: **04.03.86**

(51) Int. Cl.5: **G06F 13/12**, G06F 3/06

(54) **Schnittstelleneinrichtung.**

(30) Priorität: **07.03.85 DE 3508048**

(43) Veröffentlichungstag der Anmeldung:
**24.09.86 Patentblatt 86/39**

(45) Bekanntmachung des Hinweises auf die
Patenterteilung:
**15.12.93 Patentblatt 93/50**

(84) Benannte Vertragsstaaten:
**DE FR GB IT NL**

(56) Entgegenhaltungen:

**ELECTRONIC DESIGN, Band 32, Nr. 19, September 1984, Seiten 281-286,288,290,292, Waseca, MN, US; T.W. CANTRELL et al.: "Hard-disk controller IC cuts down number of chips in high-capacity systems"**

**ELECTRONIC DESIGN, Band 29, Nr. 13, Juni 1981, Seiten 145-150, Waseca, MN, US; D. VAN DORSTEN et al.: "Controller chip simplifies interfaces to floppy-disk drives"**

**IBM TECHNICAL DISCLOSURE BULLETIN, Band 23, Nr. 6, November 1980, Seiten 2451-2456, New York, US; J.R. CALVA et al.: "Distributed parity check function"**

**ELECTRONIC DESIGN, Band 30, Nr. 19, September 1982, Seiten 169-173, Waseca, MN, Denville, NJ, US; L. SARISKY: "100-Mm Winchester disks broaden integrator's choices"**

(73) Patentinhaber: **ALCATEL N.V.**
**Strawinskylaan 537,**
**(World Trade Center)**
**NL-1077 XX Amsterdam(NL)**
(84) Benannte Vertragsstaaten:
**FR GB IT NL**

(73) Patentinhaber: **Alcatel SEL Aktiengesellschaft**
**Lorenzstrasse 10**
**D-70435 Stuttgart(DE)**
(84) Benannte Vertragsstaaten:
**DE**

(72) Erfinder: **Manga, Salih**
**Schulberg 5**
**D-7141 Schwieberdingen(DE)**

(74) Vertreter: **Villinger, Bernhard, Dipl.-Ing. et al**
**Alcatel SEL AG**
**Patent- und Lizenzwesen**
**Postfach 30 09 29**
**D-70449 Stuttgart (DE)**

**Beschreibung**

Die Erfindung betrifft eine Schnittstelleneinrichtung zum Steuern des Befehls- und Datenaustausches zwischen einem Verarbeitungsrechner und einer Plattenspeichersteuereinheit, wobei der Verarbeitungsrechner über einen ersten Datenbus, einen Adressenbus und über erste Steuersignalleitungen und die Plattenspeichersteuereinheit über einen zweiten Datenbus und über zweite, dritte und vierte Steuersignalleitungen verfügen.

Zum Abspeichern großer Datenmengen werden üblicherweise Plattenspeicher und/oder Disketten verwendet, auf die über eine Plattenspeichersteuereinheit zugegriffen wird. Solche Plattenspeichersteuereinheiten (Disk Controller DTC 510A/510B, Data Technology Corporation) weisen einen Datenbus und Steuersignalleitungen, jedoch keinen Adressenbus auf. Somit ist ein Befehls- und Datentransfer zwischen einem üblichen Verarbeitungsrechner, der einen Datenbus, einen Adressenbus und Steuersignalleitungen aufweist, und einer wie oben beschriebenen Plattenspeichersteuereinheit aufgrund fehlender Adressierungsmöglichkeiten nicht möglich.

Die technische Aufgabe einer Schnittstelleneinrichtung gemäß der Erfindung besteht darin, einen solchen Befehls- und Datenfluß zu steuern.

Die Erfindung ist definiert im Anspruch 1.

Eine erfindungsgemäße Schnittstelleneinrichtung der eingangs genannten Art ist dadurch gekennzeichnet, daß die Schnittstelleneinrichtung einen ersten internen Bus und einen zweiten internen Bus enthält, die über einen ersten steuerbaren Zwischenspeicher für die erste Übertragungsrichtung und über einen zweiten steuerbaren Zwischenspeicher für die zweite Übertragungsrichtung untereinander in Verbindung stehen, daß eine erste und eine zweite Prüfbiterzeugungseinheit an den ersten internen Bus angekoppelt sind, daß der erste Datenbus über einen dritten steuerbaren Zwischenspeicher an den zweiten internen Bus und der zweite Datenbus über einen vierten steuerbaren Zwischenspeicher an den ersten internen Bus angeschlossen sind, daß der Adressenbus, die ersten, zweiten und dritten Steuersignalleitungen mit einer Schnittstellensteuereinheit verbunden sind, daß die dritten und die vierten Steuersignalleitungen sowie eine mit einem Ausgang der zweiten Prüfbiterzeugungseinheit verbundene Fehlersignalleitung zum Übertragen eines dem jeweiligen Zustand der Plattenspeichersteuereinheit entsprechenden Zustandswortes über einen fünften steuerbaren Zwischenspeicher mit dem zweiten internen Bus verbunden sind, daß die erste und zweite Prüfbiterzeugungseinheit an einen sechsten steuerbaren Zwischenspeicher angeschlossen sind, der über eine Prüfbitsignalleitung mit der Plattenspeichersteuereinheit in Verbindung steht und daß die Schnittstellensteuereinheit über interne Ansteuersignalleitungen mit den steuerbaren Zwischenspeichern verbunden ist.

Weitere vorteilhafte Ausgestaltungen des Gegenstandes der Erfindung sind den Unteransprüchen zu entnehmen.

Im folgenden wird anhand der Zeichnung ein Ausführungsbeispiel gemäß der Erfindung erläutert. Es zeigen:

Figur 1 ein Blockschaltbild der erfindungsgemäßen Schnittstelleneinrichtung und

Figur 2 ein detailiertes Blockschaltbild einer Schnittstellensteuereinheit nach Figur 1.

Die vorliegende erfindungsgemäße Schnittstelleneinrichtung dient zum Steuern des Befehls- und Datenaustausches zwischen einem über einen ersten Datenbus PDAT 00-07, einen Adressenbus PADR 00-07 und über erste Steuersignalleitungen SSL1 angeschlossenen Verarbeitungsrechner DMCP und einer über einen zweiten Datenbus WDAT 00-07 und über zweite, dritte und vierte Steuersignalleitungen SSL2, SSL3, SSL4 verbundene Plattenspeichersteuereinheit DC. Diese steuert ihrerseits den Zugriff auf hier nicht näher dargestellte Plattenspeicher und/oder Disketten.

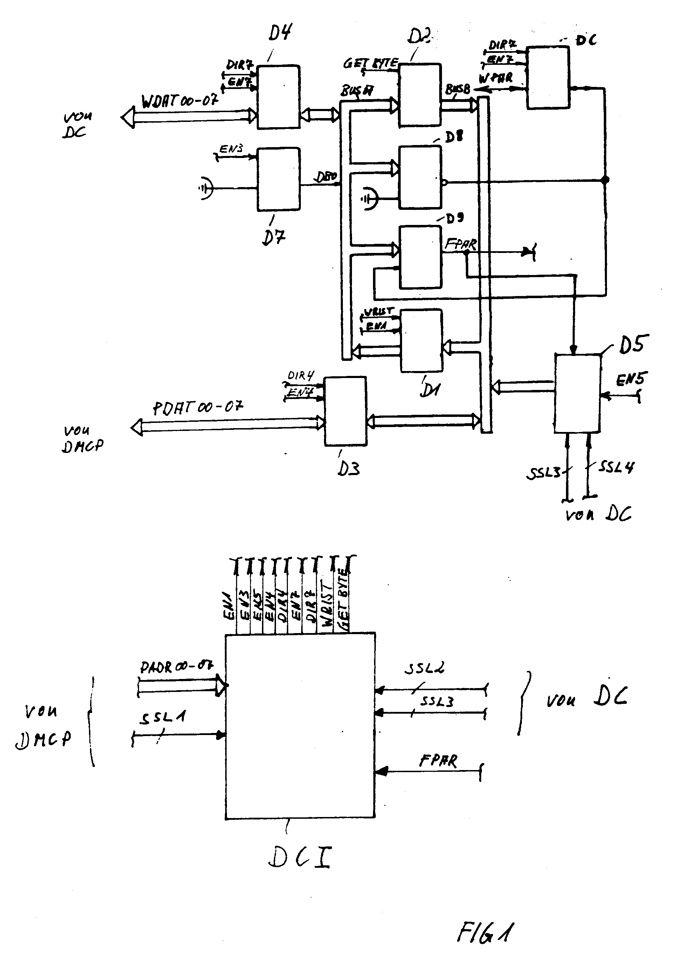

Die Schnittstelleneinrichtung (vgl. Fig. 1) enthält einen ersten internen Bus BUS A und einen zweiten internen Bus BUS B, die über einen ersten steuerbaren Zwischenspeicher D1 für die erste Übertragungsrichtung bzw. über einen zweiten steuerbaren Zwischenspeicher D2 für die zweite Übertragungsrichtung untereinander verbunden sind.

Weiterhin ist eine erste Prüfbiterzeugungseinheit D8 und eine zweite Prüfbiterzeugungseinheit D9 an den ersten internen Bus BUS A angekoppelt.

Der erste Datenbus PDAT 00-07 (vom Verarbeitungsrechner DMCP kommend) ist über einen dritten steuerbaren Zwischenspeicher D3 an den zweiten internen Bus BUS B und der zweite Datenbus WDAT 00-07 (von der Plattenspeichersteuereinheit DC) über einen vierten steuerbaren Zwischenspeicher D4 an den ersten internen Bus BUS A angeschlossen.

Zum Übertragen von Adressen und Steuersignalen sind der Adressenbus PADR 00-07 und die erste Steuersignalleitung SSL1 (beide vom Verarbeitungsrechner DMCP ausgehend) sowie die zweiten und dritten Steuersignalleitungen SSL2, SSL3 (beide von der Plattenspeichersteuereinheit DC ausgehend) mit einer Schnittstellensteuereinheit DCI verbunden. Über interne Ansteuersignalleitungen ist die Schnittstellen-

2

steuereinheit DCI ferner an die steuerbaren Zwischenspeicher angeschlossen.

Zum Übertragen eines dem jeweiligen Zustand der Plattenspeichersteuereinheit DC entsprechenden Zustandswortes (STATUS BYTE) sind die dritten und die vierten Steuersignalleitungen SSL3, SSL4 sowie eine mit einem Ausgang der zweiten Prüfbiterzeugungseinheit D9 verbundene Fehlersignalleitung FPAR über einen fünften steuerbaren Zwischenspeicher D5 an den zweiten internen Bus BUS B angeschlossen.

Außerdem sind die erste und die zweite Prüfbiterzeugungseinheit D8, D9 an einen sechsten steuerbaren Zwischenspeicher D6 geführt, der über eine Prüfbitsignalleitung WPAR mit der Plattenspeichersteuereinheit DC in Verbindung steht.

Ein siebter steuerbarer Zwischenspeicher D7 ist einerseits an ein festes Potential und andererseits an die niedrigstwertige Bitleitung DBO des ersten internen Buses BUS A angeschlossen. Über eine weitere interne Ansteuersignalleitung EN3 wird der siebte steuerbare Zwischenspeicher D7 so angesteuert, daß die niedrigstwertige Bitleitung DBO auf einen logischen Pegel entsprechend dem festen Potential gelegt wird.

Im hier beschriebenen Ausführungsbeispiel bestehen die ersten Steuersignalleitungen SSL1 aus
- einer Schreibfreigabesignalleitung PWR
- einer Lesefreigabesignalleitung PRD
- einer ersten Auswahlsignalleitung PSEL
- einer Unterbrechungssignalleitung PINTO
- einer ersten Anforderungssignalleitung PREQ1
- einer ersten Rücksetzsignalleitung PRES;

die zweiten Steuersignalleitungen SSL2 aus
- einer zweiten Auswahlsignalleitung WSEL
- einer zweiten Rücksetzsignalleitung WRST
- einer Bestätigungssignalleitung WACK;

die dritten Steuersignalleitungen SSL3 aus
- einer Belegtsignalleitung WBUSY
- einer Befehlsbestätigungssignalleitung WMSG

und die vierten Steuersignalleitungen SSL4 aus
- einer Ein-/Ausgabesignalleitung WI/O
- einer Befehls-/Datensignalleitung WC/D
- einer zweiten Anforderungssignalleitung WREQ.

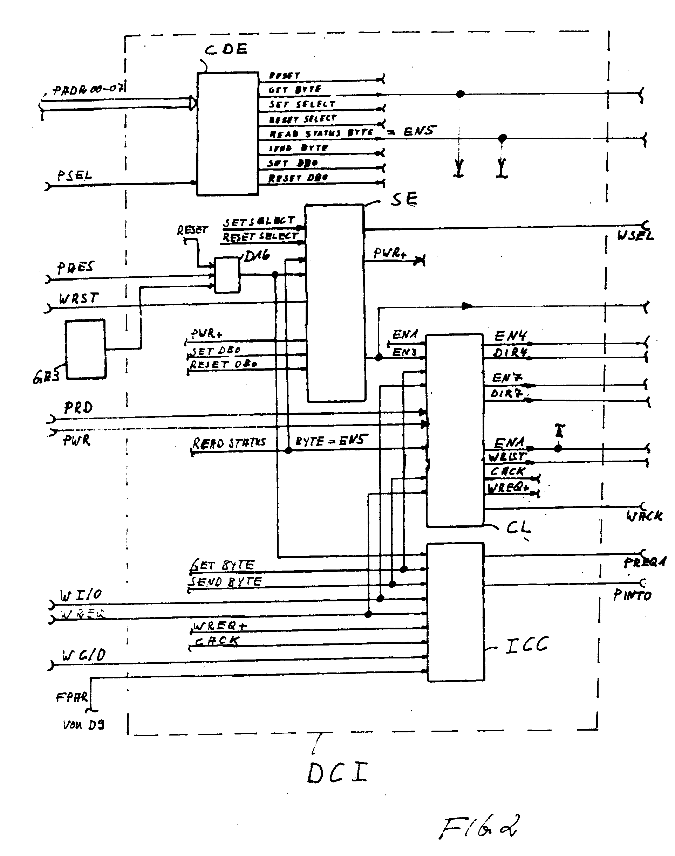

Die Schnittstellensteuereinheit DCI, wie detailliert der Fig. 2 zu entnehmen ist, enthält eine Befehlsdecodiereinheit CDE, eine Auswahlsteuereinheit SE, eine Unterbrechungs- und DMA-Steuereinheit - im folgenden kurz DMA-Einheit ICC genannt - und eine logische Ansteuereinheit CL.

Die Befehlsdecodiereinheit CDE ist über den Adressenbus PADR 00-07 und die erste Auswahlsignalleitung PSEL mit dem Verarbeitungsrechner DMCP verbunden und setzt die anliegenden Adressen in entsprechende Befehle um. Diese Befehle werden über eine erste Befehlsleitung RESET, eine zweite Befehlsleitung SET SELECT, eine dritte Befehlsleitung RESET SELECT, eine vierte Befehlsleitung SET DBO und eine fünfte Befehlsleitung RESET DBO zu der Auswahlsteuereinheit SE, über eine sechste Befehlsleitung READ STATUS BYTE = EN5 parallel zur Auswahlsteuereinheit SE und zur logischen Ansteuereinheit CL, sowie über eine siebte Befehlsleitung GET BYTE und eine achte Befehlsleitung SEND BYTE je parallel zur logischen Ansteuereinheit CL und zur DMA-Einheit ICC weitergeleitet. Dabei bilden die sechste Befehlsleitung READ STATUS BYTE = EN5 und die siebte Befehlsleitung GET BYTE gleichzeitig interne Ansteuersignalleitungen, die an den fünften steuerbaren Zwischenspeicher D5 bzw. an den zweiten steuerbaren Zwischenspeicher D2 angeschlossen sind.

Dabei ist die erste Befehlsleitung RESET nicht direkt mit der Auswahlsteuereinheit SE verbunden, sondern zusammen mit der ersten Rücksetzsignalleitung PRES und einem internen Rücksetzschaltkreis GA3 an ein logisches Gatter D16 geführt, welches jeweils eines der Rücksetzsignale wirksam zur Auswahlsteuereinheit SE durchschaltet.

Die Auswahlsteuereinheit SE ist ferner über die zweite Rücksetzsignalleitung WRST und die zweite Auswahlsignalleitung WSEL mit der Plattenspeichersteuereinheit DC verbunden. Ein Ausgang der Auswahlsteuereinheit SE ist über eine neunte Befehlsleitung PWR auf einen Eingang der Auswahlsteuereinheit SE zurückgekoppelt. Ein weiterer Ausgang der Auswahlsteuereinheit SE ist über eine zehnte Befehlsleitung EN3 parallel an die logische Ansteuereinheit CL und - als weitere interne Ansteuersignalleitung EN3 - an den siebten steuerbaren Zwischenspeicher D7 angeschlossen.

Die DMA-Einheit ICC ist über die erste Anforderungssignalleitung PREQ1, die Unterbrechungssignalleitung PINTO und die erste Rücksetzsignal PRES mit dem Verarbeitungsrechner DMCP, sowie über die zweite Anforderungssignalleitung WREQ, die Ein-/Ausgabesignalleitung WI/O und über die Befehls-/Datensignalleitung WC/D mit der Plattenspeichersteuereinheit DC verbunden. Außerdem steht die zweite Prüfbiterzeugungseinheit D9 über die Fehlersignalleitung FPAR mit der DMA-Einheit ICC in Verbindung.

Die logische Ansteuereinheit CL ist über die Schreibfreigabesignalleitung PWR und über die Lesefreigabesignalleitung PRD an den Verarbeitungsrechner DMCP angeschlossen. Ein Ausgang der logischen Ansteuereinheit CL ist über eine elfte Befehlsleitung EN1 auf einen Eingang der logischen Ansteuereinheit CL zurückgekoppelt. Ferner ist die logische Ansteuereinheit CL über eine zwölfte Befehlsleitung CACK und über

eine dreizehnte Befehlsleitung WREQ+ mit der DMA-Einheit ICC verbunden. Dabei bilden die elfte Befehlsleitung EN1 sowie eine an Ausgängen der logischen Ansteuereinheit CL angeschlossene erste Logiksignalleitung EN4, eine zweite Logiksignalleitung DIR4, eine dritte Logiksignalleitung EN7, eine vierte Logiksignalleitung DIR7 und eine fünfte Logiksignalleitung WRIST interne Ansteuersignalleitungen. Die elfte Befehlsleitung EN1 und die fünfte Logiksignalleitung WRIST sind mit dem ersten steuerbaren Zwischenspeicher D1, die erste und die zweite Logiksignalleitung EN4, DIR4 sind mit dem dritten steuerbaren Zwischenspeicher D3 und die dritte und vierte Logiksignalleitungen EN7, DIR7 sind je mit dem vierten steuerbaren Zwischenspeicher D4 und dem sechsten steuerbaren Zwischenspeicher D6 verbunden.

Zur Veranschaulichung wird nun das Steuern des Befehls- und Datenaustausches durch die erfindungsgemäße Schnittstelleneinrichtung mit Hilfe der folgenden Funktionen erläutert:
- Rücksetzen der Plattenspeichersteuereinheit DC
- Belegen der Plattenspeichersteuereinheit DC
- Lesen eines Zustandswortes (STATUS BYTE) der Plattenspeichersteuereinheit DC
- Befehls-/Datenaustausch zwischen dem Verarbeitungsrechner DMCP und der Plattenspeichersteuereinheit DC.

Durch den Verarbeitungsrechner DMCP wird mittels Adressierung des Adressenbuses PADR 00-07 in der angeschlossenen Befehlsdecodiereinheit CDE ein Rücksetzbefehl decodiert und über die erste Befehlsleitung RESET und über das zwischengeschaltete logische Gatter D16 zur Auswahlsteuereinheit SE übertragen. Außerdem kann durch den Verarbeitungsrechner DMCP über die erste Rücksetzsignalleitung PRES oder über den internen Rücksetzschaltkreis GA3 ein Rücksetzbefehl zum logischen Gatter D16 und von dort zur Auswahlsteuereinheit SE gelangen. Die Auswahlsteuereinheit SE ist über die zweite Rücksetzsignalleitung WRST mit der Plattenspeichersteuereinheit DC verbunden, so daß ein Rücksetzen in einen definierten Anfangszustand nach Belegung der zweiten Rücksetzsignalleitung WRST erfolgt. Dabei wird auch gleichzeitig die an den Ausgang des logischen Gatters D16 angeschlossene DMA-Einheit ICC zurückgesetzt.

Um nun die Plattenspeichersteuereinheit DC belegen zu können, müssen die folgenden Operationsschritte durchgeführt werden. Zunächst wird die niedrigstwertige Bitleitung DBO des zweiten Datenbuses WDAT 00-07 aktiviert ("Low-Pegel"). Hierzu legt der Verarbeitungsrechner DMCP über den Adressenbus PADR 00-07 einen Setzbefehl für die niedrigstwertige Bitleitung DBO zur Befehlsdecodiereinheit CDE an, die den Befehl decodiert und über die vierte Befehlsleitung SET DBO zur Auswahlsteuereinheit SE weiterleitet. Dadurch wird die zehnte Befehlsleitung EN3 durch die Auswahlsteuereinheit SE aktiviert ("Low-Pegel", falls die neunte Befehlsleitung PWR+ ebenfalls aktiviert ist), wodurch die niedrigstwertige Bitleitung DBO des ersten internen Buses A über den siebten steuerbaren Zwischenspeicher D7 ebenfalls aktiviert ("Low-Pegel") wird.

Gleichzeitig wird über die zehnte Befehlsleitung EN3 die logische Ansteuereinheit CL so belegt, daß die dritte und vierte Logiksignalleitung EN7, DIR7 ebenfalls durchgeschaltet wird. Somit wird der vierte steuerbare Zwischenspeicher D4 angesteuert und der von dem ersten internen Bus BUS A anliegende Pegel der niedrigstwertigen Bitleitung DBO zum zweiten Datenbus WDAT 00-07 durchgeschaltet. Die niedrigstwertige Bitleitung DBO des zweiten Datenbuses WDAT 00-07 bleibt solange belegt ("Low-Pegel"), bis sie wieder vom Verarbeitungsrechner DMCP zurückgesetzt wird.

Im nächsten Schritt wird die zweite Auswahlsignalleitung WSEL belegt. Entsprechend dem zuvor beschriebenen Schritt setzt der Verarbeitungsrechner DMCP einen Setzbefehl über den Adressenbus PADR 00-07 zur Befehlscodiereinheit CDE ab, die den decodierten Befehl über die zweite Befehlsleitung SET SELECT zur Auswahlsteuereinheit SE weiterleitet. Die Auswahlsteuereinheit SE aktiviert nun die zweite Auswahlsignalleitung WSEL ("Low-Pegel"), womit die Plattenspeichersteuereinheit DC belegt ist.

Als weitere Operation erfolgt das Lesen eines Zustandswortes (STATUS BYTE) der Plattenspeichersteuereinheit DC durch den Verarbeitungsrechner DMCP. Dieser adressiert durch einen Lesebefehl über den Adressenbus PADR 00-07 die Befehlsdecodiereinheit CDE, die den decodierten Befehl über die sechste Befehlsleitung READ STATUS BYTE = EN5 ("Low-Pegel") parallel zur logischen Ansteuereinheit CL und zum fünften steuerbaren Zwischenspeicher D5 weiterleitet. Das dort gespeicherte Zustandswort (STATUS BYTE) erhält über die angeschlossenen Signalleitungen die folgende Information:

```
Zustandswort:        Bit 0  - Belegtsignal (WBUSY)

                     Bit 1  - Ein-/Ausgangssignal (WI/O)

                     Bit 2  - Befehls-/Datensignal (WC/D)

                     Bit 3  - Befehlsbestätigungssignal (WMSG)

                     Bit 4  - Fehlersignal (FPAR)

                     Bit 5  - zweites Anforderungssignal (WREQ)

                     Bit 6  - }  im Betrieb fest auf
                              }
                     Bit 7  - }  "Low-Pegel" gelegt
```

die nun aus dem fünften steuerbaren Zwischenspeicher D5 (infolge EN5) auf den zweiten internen Bus BUS B ausgelesen wird. Gleichzeitig steuert die logische Ansteuereinheit CL über die erste und zweite Logisignalleitung EN4, DIR4 den dritten steuerbaren Zwischenspeicher D3 so an, daß das Zustandswort (STATUS BYTE) auf den ersten Datenbus PDAT 00-07 und somit zum Verarbeitungsrechner DCMP weitergeleitet wird. Nachdem der Verarbeitungsrechner DMCP das Zustandswort (STATUS BYTE) gelesen hat und die Belegung der Plattenspeichersteuereinheit DC( durch BIT 0 - WBUSY) bestätigt bekommen hat, sendet er einen Rücksetzbefehl für die zweite Auswahlsignalleitung WSEL über den Adressenbus PADR 00-07 zur Befehlsdecodiereinheit CDE und von dort über die dritte Befehlsleitung RESET SELECT zur Auswahlsteuereinheit SE. Diese setzt die Belegung ("Low-Pegel") der zweiten Auswahlsignalleitung WSEL zurück.

Anschließend sendet der Verarbeitungsrechner DMCP einen Befehl zum Rücksetzen der niedrigstwertigen Bitleitung DB0 des zweiten Datenbuses WDAT 00-07 über den Adressenbus PADR 00-07, die Befehlsdecodiereinheit CDE und über die fünfte Befehlsleitung RESET DB0 zur Auswahlsteuereinheit SE. Dadurch wird die zehnte Befehlsleitung EN3 und über die logische Ansteuereinheit CL die dritte und vierte Logiksignalleitung EN7, DIR7 zurückgesetzt, wobei der siebte steuerbare Zwischenspeicher D7 (durch EN3) und der vierte steuerbare Zwischenspeicher D4 (durch EN7, DIR7) die Belegung der niedrigstwertigen Bitleitung DB0 auf dem ersten internen Buas BUS A bzw. dem zweiten Datenbus WDAT 00-07 aufheben.

Zum Austauschen eines Wortes (BYTE) zwischen dem Verarbeitungsrechner DMCP und der Plattenspeichersteuereinheit DC muß jeweils durch Befehle die entsprechende Übertragungsrichtung festgelegt werden.

Der Verarbeitungsrechner DMCP adressiert für die erste Übertragungsrichtung durch einen Wort-Schreibbefehl (SEND BYTE) über den Adressenbus PADR 00-07 die Befehlsdecodiereinheit CDE, die über die achte Befehlsleitung SEND BYTE den decodierten Befehl parallel zur DMA-Einheit ICC und zur logischen Ansteuereinheit CL weiterleitet.

Der Wort-Austausch erfolgt nun durch das Aktivieren der ersten Anforderungssignalleitung PREQ1, die in Abhängigkeit der Pegel der dreizehnten Befehlsleitung WREQ +, der Ein-/Ausgabesignalleitung WI/O, der Befehls-/Datensignalleitung WC/D und der Fehlersignalleitung FPAR gesetzt wird. Die erste Anforderungssignalleitung PREQ1 bleibt solange gesetzt, bis durch den Verarbeitungsrechner DMCP eine Schreib-/Leseoperation durchgeführt wird.

Wenn nun die Schreibfreigabesignalleitung PWR und die achte Befehlsleitung SEND BYTE aktiviert sind, so wird durch die logische Ansteuereinheit CL die elfte Befehlsleitung EN1 ebenfalls gesetzt. Dies bewirkt weiterhin, daß durch die logische Ansteuereinheit CL die erste, dritte und vierte Logiksignalleitung EN4, EN7, DIR7 aktiviert werden.

Gleichzeitig wird durch die aktive Schreibfreigabesignalleitung PWR und die aktive achte Befehlsleitung SEND BYTE durch die logische Ansteuereinheit CL die zwölfte Befehlsleitung CACK gesetzt, wodurch die DMA-Einheit ICC die erste Anforderungssignalleitung PREQ1 wieder zurücksetzt.

Das vom Verarbeitungsrechner DMCP kommende Wort (BYTE) wird über den ersten Datenbus PDAT 00-07 und den dritten steuerbaren Zwischenspeicher D3 (durch EN4) zum zweiten internen Bus BUS B gesendet, sowie bei ansteigender Flanke des Signales auf der fünften Logiksignalleitung WRIST (durch PWR, SEND BYTE aktiviert) in dem ersten steuerbaren Zwischenspeicher D1 abgelegt.

Das gespeicherte Datenwort wird bei aktiver elfter Befehlsleitung EN1 sodann über den ersten internen Bus BUS A einerseits zur ersten Prüfbiterzeugungseinheit D8 und andererseits über den vierten steuerbaren Zwischenspeicher D4 (durch EN7, DIR7) zum zweiten Datenbus WDAT 00-07 und somit zur Plattenspeichersteuereinheit DC übertragen.

EP 0 195 309 B1

Gleichzeitig wird durch die erste Prüfbiterzeugungseinheit D8 für das Datenwort ein Prüfbit generiert und über den angeschlossenen sechsten Zwischenspeicher D6 (durch EN7, DIR7) sowie über die Prüfbitsignalleitung WPAR zur Plattenspeichersteuereinheit DC gesendet.

Nach der Übernahme des Datenwortes durch die Plattenspeichersteuereinheit DC setzt diese den Pegel der zweiten Anforderungssignalleitung WREQ zurück, so daß durch die logische Ansteuereinheit CL der Pegel der elften Befehlsleitung EN1 und dadurch die Pegel der ersten, dritten und vierten Logiksignalleitung EN4, EN7, DIR7 ebenfalls zurückgenommen werden.

Der Verarbeitungsrechner DMCP steuert für die zweite Übertragungsrichtung durch einen Wort-Lesebefehl (GET BYTE) über den Adressenbus PADR 00-07 die Befehlsdecodiereinheit CDE an, die den decodierten Befehl über die siebte Befehlsleitung GET BYTE parallel zur DMA-Einheit ICC und zur logischen Ansteuereinheit CL weiterleitet.

Zum Wort-Austausch wird, wie zuvor beschrieben, die erste Anforderungssignalleitung PREQ1 entsprechend den Pegeln der dreizehnten Befehlsleitung WREQ+, der Ein-/Ausgabesignalleitung WI/O, der Befehls-/Datensignalleitung WC/D und der Fehlersignalleitung FPAR aktiviert.

Wenn nun die Lesefreigabesignalleitung PRD und die siebte Befehlsleitung GET BYTE aktiviert sind, werden die erste und die zweite Logiksignalleitung EN4, CIR4 und die dritte Logiksignalleitung EN7 (infolge WI/O) durch die logische Ansteuereinheit CL gesetzt.

Somit wird das von der Plattenspeichersteuereinheit DC kommende Wort über den zweiten Datenbus WDAT 00-07 und den vierten steuerbaren Zwischenspeicher D4 (durch EN7) auf den ersten internen Bus BUS A gesendet und parallel im zweiten steuerbaren Zwischenspeicher D2 sowie in der zweiten Prüfbiterzeugungseinheit D9 abgelegt. Bei aktiver siebter Befehlsleitung GET BYTE wird dann das gespeicherte Wort über den zweiten internen Bus BUS B über den dritten steuerbaren Zwischenspeicher D3 (durch EN4, DIR4) zum ersten Datenbus PDAT 00-07 und somit zum Verarbeitungsrechner DMCP übertragen.

Gleichzeitig wird durch die zweite Prüfbiterzeugungseinheit D9 ein Prüfbit generiert und ein entsprechendes Signal über die Fehlersignalleitung FPAR übertragen. Im Falle eines Bitfehlers wird durch die DMA-Einheit ICC ein Unterbrechungsbefehl über die Unterbrechungssignalleitung PINTO zum Verarbeitungsrechner DMCP gesendet. Dadurch kann über ein Rücksetzbefehl, wie bereits beschrieben, die ganze Operation wiederholt werden.

Durch die aktive Lesefreigabesignalleitung PRD und die aktive siebte Befehlsleitung GET BYTE wird wieder durch die logische Ansteuereinheit CL die zwölfte Befehlsleitung CACK gesetzt, wodurch die DMA-Einheit ICC die erste Anforderungssignalleitung PREQ1 zurücksetzt.

Um einen einwandfreien Wort-Austausch zwischen dem Verarbeitungsrechner DMCP und der Plattenspeichersteuereinheit DC zu gewährleisten, wird eine Bestätigung der jeweils ausgeführten Operation der Plattenspeichersteuereinheit DC mitgeteilt.

Durch das Aktivieren der Schreibfreigabesignalleitung PWR oder der Lesefreigabesignalleitung PRD bei aktivierter achter Befehlsleitung SEND BYTE bzw. siebter Befehlsleitung GET BYTE wird durch die logische Ansteuereinheit CL ein Bestätigungssignal über die Bestätigungssignalleitung WACK zur Plattenspeichersteuereinheit DC geleitet. Die Bestätigungssignalleitung WACK bleibt solange gesetzt, bis die dreizehnte Befehlsleitung WREQ+ gesetzt wird. Wiederum mit dem Aktivieren der zweiten Anforderungssignalleitung WREQ wird ein Setzen der Bestätigungssignalleitung WACK bei der nächsten Operation ermöglicht.

6

EP 0 195 309 B1

| | |
|---|---|
| Verarbeitungsrechner | DMCP |
| Plattenspeichersteuereinheit | DC |
| erster Datenbus | PDAT 00-07 |
| zweiter Datenbus | WDAT 00-07 |
| Adressenbus | PADR 00-07 |
| erste Steuersignalleitungen | SSL1 |
| zweite Steuersignalleitungen | SSL2 |
| dritte Steuersignalleitungen | SSL3 |
| vierte Steuersignalleitungen | SSL4 |
| erster interner Bus | BUS A |
| zweiter interner Bus | BUS B |
| erster steuerbarer Zwischenspeicher | D1 |
| zweiter steuerbarer Zwischenspeicher | D2 |
| dritter steuerbarer Zwischenspeicher | D3 |
| vierter steuerbarer Zwischenspeicher | D4 |
| fünfter steuerbarer Zwischenspeicher | D5 |
| sechster steuerbarer Zwischenspeicher | D6 |
| siebter steuerbarer Zwischenspeicher | D7 |
| erste Prüfbiterzeugungseinheit | D8 |
| zweite Prüfbiterzeugungseinheit | D9 |
| Schnittstellensteuereinheit | DCI |
| Fehlersignalleitung | FPAR |
| Prüfbitsignalleitung | WPAR |
| Schreibfreigabesignalleitung | PWR |
| Lesefreigabesignalleitung | PRD |
| erste Auswahlsignalleitung | PSEL |
| Unterbrechungssignalleitung | PINTO |
| erste Anforderungssignalleitung | PREQ1 |
| erste Rücksetzsignalleitung | PRES |
| zweite Auswahlsignalleitung | WSEL |
| zweite Rücksetzsignalleitung | WRST |
| Bestätigungssignalleitung | WACK |
| Belegtsignalleitung | WBUSY |

7

EP 0 195 309 B1

| | |
|---|---|
| Befehlsbestätigungssignalleitung | WMSG |
| Ein-/Ausgabesignalleitung | WI/O |
| Befehls-/Datensignalleitung | WC/D |
| zweite Anforderungssignalleitung | WREQ |
| niedrigswertige Bitleitung | BDO |
| Befehlsdecodiereinheit | CDE |
| Auswahlsteuereinheit | SE |
| Unterbrechungs- und DMA-Steuereinheit | ICC    DMA-Einheit |
| logische Ansteuereinheit | CL |
| erste Befehlsleitung | RESET |
| zweite Befehlsleitung | SET SELECT |
| dritte Befehlsleitung | RESET SELECT |
| vierte Befehlsleitung | SET DBO |
| fünfte Befehlsleitung | RESET DBO |
| sechste Befehlsleitung | READ STATUS BYTE = EN |
| siebte Befehlsleitung | GET BYTE |
| achte Befehlsleitung | SEND BYTE |
| neunte Befehlsleitung | PWR+ |
| zehnte Befehlsleitung | EN3 |
| elfte Befehlsleitung | EN1 |
| zwölfte Befehlsleitung | CACK |
| dreizehnte Befehlsleitung | WREQ+ |
| erste Logiksignalleitung | EN4 |
| zweite Logiksignalleitung | DIR4 |
| dritte Logiksignalleitung | EN7 |
| vierte Logiksignalleitung | DIR7 |
| fünfte Logiksignalleitung | WRIST |
| Rücksetzschaltkreis | GA3 |
| logisches Gatter | D16 |

**Patentansprüche**

1. Schnittstelleneinrichtung zum Steuern des Befehls- und und Datenaustausches zwischen einem Verarbeitungsrechner (DMCP) und einer Plattenspeichersteuereinheit (DC), wobei der Verarbeitungsrechner (DMCP) über einen ersten Datenbus (PDAT 00-07), einen Adressenbus (PADR00-07) und über erste Steuersignalleitungen (SSL1) und die Plattenspeichersteuereinheit (DC) über einen zweiten Datenbus (WDAT 00-07) und über zweite, dritte und vierte Steuersignalleitungen (SSL2, SSL3, SSL4) verfügen, **dadurch gekennzeichnet,** daß die Schnittstelleneinrichtung einen ersten internen Bus (BUS A) und einen zweiten internen Bus (BUS B) enthält, die über einen ersten steuerbaren Zwischenspeicher (D1 ) für die erste Übertragungsrichtung und über einen zweiten steuerbaren Zwischenspeicher (D2) für die zweite Übertragungsrichtung untereinander in Verbindung stehen, daß eine erste und eine zweite Prüfbiterzeugungseinheit (D8, D9) an den ersten internen Bus (BUS A) angekoppelt sind, daß der erste Datenbus (PDAT 00-07) über einen dritten steuerbaren Zwischenspeicher (D3) an den zweiten internen

8

Bus (BUS B) und der zweite Datenbus (WDAT 00-07) über einen vierten steuerbaren Zwischenspeicher (D4) an den ersten internen Bus (BUS A) angeschlossen sind, daß der Adressenbus (PADR 00-07) und die ersten, zweiten und dritten Steuersignalleitungen (SSL1, SSL2, SSL3) mit einer Schnittstellensteuereinheit (DCI) verbunden sind, daß die dritten und die vierten Steuersignalleitungen (SSL3, SSL4) sowie eine mit einem Ausgang der zweiten Prüfbiterzeugungseinheit (D9) verbundene Fehlersignalleitung (FPAR) zum übertragen eines dem jeweiligen Zustand der Plattenspeichersteuereinheit (DC) entsprechenden Zustandswortes über einen fünften steuerbaren Zwischenspeicher (D5) mit dem zweiten internen Bus (BUS B) verbunden sind, daß die erste und zweite Prüfbiterzeugungseinheit (D8, D9) an einen sechsten steuerbaren Zwischenspeicher (D6) angeschlossen sind, der über eine Prüfbitsignalleitung (WPAR) mit der Plattenspeichersteuereinheit (DC) in Verbindung steht, daß die Schnittstellensteuereinheit (DCI) über interne Ansteuersignalleitungen mit den steuerbaren Zwischenspeichern (D1, D2, D3, D4, D5, D6) verbunden ist, und daß die Schnittstellensteuereinheit (DCI) die über den Adressenbus (PADR 00-07) anliegenden Adressen in entsprechende Befehle umsetzt.

2. Schnittstelleneinrichtung nach Anspruch 1, dadurch gekennzeichnet, daß die ersten Steuersignalleitungen (SSL1) eine Schreibfreigabesignalleitung (PWR), eine Lesefreigabesignalleitung (PRD) , eine erste Auswahlsignalleitung (PSEL), eine Unterbrechungssignalleitung (P INTO), eine erste Anforderungssignalleitung (PREQ1) und eine erste Rücksetzsignalleitung (PRES) aufweisen.

3. Schnittstelleneinrichtung nach Anspruch 1 dadurch gekennzeichnet, daß die zweiten Steuersignalleitungen (SSL2) aus einer zweiten Auswahlsignalleitung (WSEL), einer zweiten Rücksetzsignalleitung (WRST) und einer Bestätigungssignalleitung (WACK) aufgebaut sind, daß die dritten Steuersignalleitungen (SSL3) aus einer Belegtsignalleitung (WBUSY) und einer Befehlsbestätigungssignalleitung (WMSG) bestehen und daß die vierten Steuersignalleitungen (SSL4)(eine Ein-/Ausgabesignalleitung (WI/O), eine Befehls-/Datensignalleitung (WC/D) und eine zweite Anforderungssignalleitung (WREQ) enthalten.

4. Schnittstelleneinrichtung nach einem der vorhergehenden Ansprüche, dadurch gekennzeichnet, daß ein siebter steuerbarer Zwischenspeicher (D7) einerseits an ein festes Potential und andererseits an die niedrigstwertige Bitleitung (DBO) des ersten internen Busses (BUS A) angeschlossen ist und über eine weitere interne Ansteuersignalleitung (EN3) so angesteuert wird, daß die niedrigstwertige Bitleitung (DBO) auf einen logischen Pegel entsprechend dem festen Potential gelegt wird.

5. Schnittstelleneinrichtung nach Anspruch 1, dadurch gekennzeichnet, daß die Schnittstellensteuereinheit (DCI) eine Befehlsdecodiereinheit (CDE), eine Auswahlsteuereinheit (SE), eine Unterbrechungs- und DMA-Steuereinheit (ICC) und eine logische Ansteuereinheit (CL) aufweist, die untereinander mittels Befehlsleitungen verbunden sind.

6. Schnittstelleneinrichtung nach Anspruch 2 und 5, dadurch gekennzeichnet, daß an die Befehlsdecodiereinheit (CDE) der Adressenbus (PADR 00-07) und die erste Auswahlsignalleitung (PSEL) angeschlossen sind, daß entsprechend den von dem Verarbeitungsrechner (DMCP) über den Adressenbus (PADR 00-07) angelegten Adressen, decodierte Befehle über eine erste (RESET), eine zweite (SET SELECT), eine dritte (RESET SELECT), eine vierte (SET DBO) und eine fünfte Befehlsleitung (RESET DBO) zu der Auswahlsteuereinheit (SE), über eine sechste Befehlsleitung (READ STATUS BYTE = EN5) parallel zur Auswahlsteuereinheit (SE) und zur logischen Ansteuereinheit (CL) und über eine siebte (GET BYTE) und achte Befehlsleitung (SEND BYTE) je parallel zur logischen Ansteuereinheit (CL) und zur Unterbrechungs- und DMA-Steuereinheit (ICC) weitergeleitet werden, wobei die sechste (READ STATUS BYTE = EN5) und die siebte Befehlsleitung (GET BYTE) außerdem interne Ansteuersignalleitungen bilden und an den fünften steuerbaren Zwischenspeicher (D5) bzw. den zweiten steuerbaren Zwischenspeicher (D2) angeschlossen sind.

7. Schnittstelleneinrichtung nach Anspruch 3, 4 und 6 dadurch gekennzeichnet, daß die Auswahlsteuereinheit (SE) mit der ersten Rücksetzsignalleitung (PRES), der zweiten Rücksetzsignalleitung (WRST) und der zweiten Auswahlsignalleitung (WSEL) verbunden ist, daß ein Ausgang auf einen Eingang der Auswahlsteuereinheit (SE) über eine neunte Befehlsleitung (PWR +) zurückgekoppelt ist und daß die Auswahlsteuereinheit (SE) über eine zehnte Befehlsleitung (EN3) parallel mit der logischen Ansteuereinheit (CL) und - als weitere interne Ansteuersignalleitung - mit dem siebten steuerbaren Zwischenspeicher (D7) verbunden ist.

EP 0 195 309 B1

**8.** Schnittstelleneinrichtung nach Anspruch 7, dadurch gekennzeichnet, daß die Unterbrechungs- und DMA-Steuereinheit (ICC) mit der ersten Anforderungssignalleitung (PREQ1), der Unterbrechungssignalleitung (P INTO), der ersten Rücksetzsignalleitung (PRES), der zweiten Anforderungssignalleitung (WREQ), der Ein-/Ausgabesignalleitung (WI/O), der Befehls-/Datensignalleitung (WC/D) und mit der Fehlersignalleitung (FPAR) verbunden ist.

**9.** Schnittstelleneinrichtung nach Anspruch 8, dadurch gekennzeichnet, daß ein Ausgang der logischen Ansteuereinheit (CL) über eine elfte Befehlsleitung (EN1) auf einen Eingang der logischen Ansteuereinheit (CL) zurückgekoppelt ist, daß die logische Ansteuereinheit (CL) über eine zwölfte (CACK) und eine dreizehnte Befehlsleitung (WREQ + ) an die Unterbrechungs- udn DMA-Steuereinheit (ICC) angeschlossen ist, daß die Schreibfreigabesignalleitung (PWR) und die Lesefreigabesignalleitung (PRD) an die logische Ansteuereinheit (CL) geführt sind, und daß die elfte Befehlsleitung (EN1) sowie eine an Ausgängen der logischen Ansteuereinheit (CL) angeschlossene erste (EN4), zweite (DIR4), dritte (EN7), vierte (DIR7) und fünfte Logiksignalleitung (WRIST) interne Ansteuersignalleitungen bilden.

**10.** Schnittstelleneinrichtung nach Anspruch 3, 5 und 6, dadurch gekennzeichnet, daß die erste Rücksetzsignalleitung (PRES), die erste Befehlsleitung (RESET) und ein interner Rücksetzschaltkreis (GA3) über ein logisches Gatter (D16) so mit der Auswahlsteuereinheit (SE) verbunden sind, daß jeweils eines der Rücksetzsignale wirksam durchschaltbar ist.

**Claims**

**1.** An interface device for controlling the command and data transfer between a host computer (DMCP) and a disk controller (DC), the host computer (DMCP) comprising a first data bus (PDAT 00-07), an address bus (PADR 00-07), and first control-signal lines (SSL1), and the disk controller (DC) comprising a second data bus (WDAT 00-07) and second, third, and fourth control-signal lines (SSL2, SSL3, SSL4), **characterized in** that the interface device contains a first internal bus (BUS A) and a second internal bus (BUS B) which are interconnected via a first controllable buffer (D1) for the first direction of transfer and via a second controllable buffer (D2) for the second direction of transfer, that a first check-bit generator (D8) and a second check-bit generator (D9) are coupled to the first internal bus (BUS A), that the first data bus (PDAT 00-07) is connected to the second internal bus (BUS B) via a third controllable buffer (D3), that the second data bus (WDAT 00-07) is connected to the first internal bus (BUS A) via a fourth controllable buffer (D4), that the address bus (PADR 00-07) and the first, second, and third control-signal lines (SSL1, SSL2, SSL3) are connected to an interface controller (DCI), that the third and fourth control-signal lines (SSL3, SSL4) and an error-signal line (FPAR) connected to an output of the second check-bit generator (D9) and serving to transfer a status word indicating the respective status of the disk controller (DC) are connected to the second internal bus (BUS B) via a fifth controllable buffer (D5), that the first and second check-bit generators (D8, D9) are connected to a sixth controllable buffer (D6) linked to the disk controller (DC) by a check-bit line (WPAR), that the interface controller (DCI) is connected to the controllable buffers (D1, D2, D3, D4, D5, D6) by internal control-signal lines, and that the interface controller (DCI) converts the addresses applied via the address bus (PADR 00-07) into corresponding commands.

**2.** An interface device as claimed in claim 1, charactrized in that the first control-signal lines (SSL1) comprise a write-enable-signal line (PWR), a read-enable-signal line (PRD), a first select-signal line (PSEL), an interrupt-signal line (P INTO), a first request-signal line (PREQ1), and a first reset-signal line (PRES).

**3.** An interface device as claimed in claim 1, characterized in that the second control-signal lines (SSL2) consist of a second select-signal line (WSEL), a second reset-signal line (WRST), and an acknowledge-signal line (WACK), that the third control-signal lines (SSL3) consist of a busy-signal line (WBUSY) and a command-acknowledge-signal line (WMSG), and that the fourth control-signal lines (SSL4) contain an input/output signal line (WI/O), a command/data signal line (WC/D), and a second request signal line (WREQ).

**4.** An interface device as claimed in any one of the preceding claims, characterized in that a seventh controllable buffer (D7) is connected to a fixed potential and to the least significant bit line (DBO) of the first internal bus (BUS A) and is so controlled over an additional internal-control-signal line (EN3) that

10

the least significant bit line (DBO) is at a logic level representing the fixed potential.

5. An interface device as claimed in claim 1, characterized in that the interface controller (DCI) comprises a command decoder (CDE), a select logic (SE), an interrupt and DMA controller (ICC), and a control logic (CL) which are inter-connected by command lines.

6. An interface device as claimed in claims 2 and 5, characterized in that the address bus (PADR 00-07) and the first select-signal line (PSEL) are connected to the command decoder (CDE),that according to the addresses transferred from the host computer (DMCP) over the address bus (PADR 00-07) into the command decoder (CDE), decoded commands are transferred out over a first command line (RESET), a second command line (SET SELECT), a third command line (RESET SELECT), a fourth command line (SET DBO), and a fifth command line (RESET DBO) to the select logic (SE), over a sixth command line (READ STATUS BYTE = EN5) both to the select logic (SE) and to the control logic (CL), and over a seventh command line (GET BYTE) and an eighth command line (SEND BYTE) both to the select logic (CL) and to the interrupt and DMA controller (ICC), the sixth command line (READ STATUS BYTE = EN5) and the seventh command line (GET BYTE) also forming two of the internal control-signal lines and being connected to the fifth controllable buffer (D5) and the second controllable buffer (D2), respectively.

7. An interface device as claimed in claims 3, 4 and 6, characterized in that the select logic (SE) is connected to the first reset-signal line (PRES), to the second reset-signal line (WRST), and to the second select-signal line (WSEL), that an output of the select logic (SE) is coupled back to an input of the select logic (SE) via a ninth command line (PWR + ), and that a tenth command line (EN3) connects the select logic (SE) both to the control logic (CL) and - as an additional internal control-signal line - to the seventh controllable buffer (D7).

8. An interface device as claimed in claim 7, characterized in that the interrupt and DMA controller (ICC) is connected to the first request-signal line (PREQ1), the interrupt signal line (P INTO), the first reset-signal line (PRES), the second request-signal line (WREQ), the input/output signal line (WI/O), the command/data signal line (WC/D), and the error-signal line (FPAR).

9. An interface device as claimed in claim 8, characterized in that an output of the control logic (CL) is coupled back to an input of the control logic (CL) via an eleventh command line (EN1), that the control logic (CL) is connected to the interrupt and DMA controller (ICC) by a twelfth command line (CACK) and a thirteenth command line (WREQ + ), that the write-enable-signal line (PWR) and the read-enable-signal line (PRD) are connected to the control logic (CL), and that the eleventh command line (EN1) and first (EN4), second (DIR4), third (EN7), fourth (DIR7), and fifth (WRIST) logic-signal lines connected to the outputs of the control logic (CL) form control-signal lines.

10. An interface device as claimed in claims 3, 5 and 6, characterized in that the first reset-signal line (PRES), the first command line (RESET), and an internal reset circuit (GA3) are so connected to the select logic (SE) that the reset signals can be effectively switched through one at a time.

## Revendications

1. Dispositif d'interface pour commander l'échange d'instructions et de données entre un calculateur de traitement (DMCP) et une unité de commande (DC) d'une mémoire sur disque, dispositif dans lequel le calculateur de traitement (DMCP) dispose d'un premier bus de données (PDAT 00-07), d'un bus d'adresses (PADR00-07) et de premières lignes de signal de commande (SSL1) et l'unité de commande (DC) de la mémoire sur disque dispose d'un second bus de données (WDAT 00-07) et de secondes, troisièmes, et quatrièmes lignes de signal de commande (SSL2, SSL3, SSL4), dispositif caractérisé par le fait que le dispositif d'interface contient un premier bus interne (BUS A) et un second bus interne (BUS B) qui sont en liaison entre eux par l'intermédiaire d'une première mémoire intermédiaire activable (D1) pour le premier sens de transfert et par l'intermédiaire d'une seconde mémoire intermédiaire activable (D2) pour le second sens de transfert, par le fait qu'une première et une seconde unités (D8, D9) de production d'un bit de contrôle sont couplées au premier bus interne (BUS A), par le fait que le premier bus de données (PDAT 00-07) est relié, par l'intermédiaire d'une troisième mémoire intermédiaire activable (D3), au second bus interne (BUS B) et que le second bus de données (WDAT 00-07) est relié, par l'intermédiaire d'une quatrième mémoire intermédiaire activable (D4), au premier bus interne (BUS A), par le fait que le bus d'adresses (PADR 00-07) et les premières, secondes et troisièmes lignes de signal de commande (SSL1, SSL2, SSL3) sont reliées avec l'unité de commande d'interface (DCI), par le fait que les troisièmes et les quatrièmes lignes de signal de commande (SSL3, SSL4) ainsi qu'une ligne de signal d'erreur (FPAR), reliée avec une sortie de la seconde unité (D9) de production d'un bit de contrôle, sont, pour transférer un mot d'état correspondant à l'état respectif de l'unité de commande (DC) de la mémoire sur disque, reliées, par l'intermédiaire d'une cinquième mémoire intermédiaire active (D5), avec le second bus interne (BUS B), par le fait que la première et la seconde unités (D8, D9) de production du bit de contrôle sont reliées à une sixième mémoire intermédiaire activable (D6) qui, par l'intermédiaire d'une ligne de signal (WPAR) du bit de contrôle, est reliée avec l'unité de commande (DC) de la mémoire sur disque, par le fait que l'unité de commande d'interface (DCI) est reliée, par l'intermédiaire de lignes de signal d'activation internes, avec les mémoires intermédiaires activables (D1, D2, D3, D4, D5, D6), et par le fait que l'unité de commande d'interface (DCI) convertit en instructions correspondantes les adresses arrivant par l'intermédiaire du bus d'adresses (PADR 00-07).

2. Dispositif d'interface selon la revendication 1, caractérisé par le fait que les premières lignes de signal de commande (SSL1) présentent une ligne de signal de validation d'écriture (PWR), une ligne de signal de validation de lecture (PRD), une première ligne de signal de sélection (PSEL), une ligne de signal d'interruption (PINTO), une première ligne de signal d'interrogation (PREQ1) et une première ligne de signal de réinitialisation (PRES).

3. Dispositif d'interface selon la revendication 1, caractérisé par le fait que les secondes lignes de signal de commande (SSL2) sont constituées d'une seconde ligne de signal de sélection (WSEL), d'une seconde ligne de signal de réinitialisation (WRST) et d'une ligne de signal de confirmation (WACK), par le fait que les troisièmes lignes de signal de commande (SSL3) sont constituées d'une ligne de signal d'occupation (WBUSY) et d'une ligne de signal de confirmation d'instruction (WMSG) et par le fait que les quatrièmes lignes de signal de commande (SSL4) contiennent une ligne de signal d'entrée/sortie (WI/O), une ligne de signal d'instructions/de données (WC/D) et une seconde ligne de signal d'interrogation (WREQ).

4. Dispositif d'interface selon l'une des revendications précédentes, caractérisé par le fait qu'une septième mémoire intermédiaire activable (D7) est reliée d'une part à un potentiel fixe et d'autre part à la ligne du bit de poids faible (DB0) du premier bus interne (BUS A) et que, par l'intermédiaire d'une autre ligne interne de signal d'activation (EN3), elle est activée de façon que la ligne du bit de poids faible (DB0) passe au niveau logique correspondant au potentiel fixe.

5. Dispositif d'interface selon la revendication 1, caractérisé par le fait que l'unité de commande d'interface (DCI) présente une unité de décodage d'instruction (CDE), et une unité de commande de sélection (SE), une unité de commande d'interruption et d'accès direct en mémoire DMA (ICC) et une unité d'activation logique (CL) qui sont reliées entre elles au moyen de lignes d'instruction.

6. Dispositif d'interface selon les revendications 2 et 5, caractérisé par le fait qu'à l'unité de décodage d'instruction (CDE) sont reliés le bus d'adresses (PADR 00-07) et la première ligne de signal de sélection (PSEL), par le fait qu'en fonction des adresses établies par le calculateur de traitement (DMCP) par l'intermédiaire du bus d'adresses (PADR 00-07), des instructions décodées sont transmises, par l'intermédiaire d'une première (RESET), d'une seconde (SET SELECT), d'une troisième (RESET SELECT), d'une quatrième (SET DB0) et d'une cinquième lignes d'instuction (RESET DB0), à l'unité de commande de sélection (SE), par l'intermédiaire d'une sixième ligne d'instruction (READ STATUS BYTE = EN5), en parallèle, à l'unité de commande de sélection (SE) et l'unité d'activation logique (CL) et, par l'intermédiaire d'une septième (GET BYTE) et d'une huitième (SEND BYTE) lignes d'instruction, en parallèle, à la fois à l'unité d'activation logique (CL) et à l'unité de commande d'interruption et d'accès direct en mémoire DMA (ICC), étant précisé que la sixième (READ STATUS BYTE = EN5) et la septième (GET BYTE) lignes d'instruction forment en outre des lignes internes de signal d'activation et sont reliées à la cinquième mémoire intermédiaire activable (D5) ou à la seconde mémoire intermédiaire activable (D2).

**7.** Dispositif d'interface selon les revendications 3, 4 et 6, caractérisé par le fait que l'unité de commande de sélection (SE) est reliée avec la première ligne de signal de réinitialisation (PRES), avec la seconde ligne de signal de réinitialisation (WRST) et avec le seconde ligne de signal de sélection (WSL), par le fait qu'une sortie est rétrocouplée sur une entrée de l'unité de commande de sélection (SE) par l'intermédiaire d'une neuvième ligne d'instruction (PWR +) et par le fait que l'unité de commande de sélection (SE) est reliée, par l'intermédiaire d'une dixième ligne d'instruction (EN3), en parallèle, avec l'unité d'activation logique (CL) et en tant qu'autre ligne interne de signal d'activation - avec la septième mémoire intermédiaire activable (D7).

**8.** Dispositif d'interface selon la revendication 7, caractérisé par le fait que l'unité de commande d'interruption et d'accès direct en mémoire DMA (ICC) est reliée avec la première ligne de signal d'interrogation (PREQ1), avec la ligne de signal d'interruption (PINTO), avec la première ligne de signal de réinitialisation (PRES), avec la seconde ligne de signal d'interrogation (WREQ), avec la ligne de signal d'entrée/sortie (WI/O), avec la ligne de signal d'intructions/de données (WC/D) et avec la ligne de signal d'erreur (FPAR).

**9.** Dispositif d'interface selon la revendication 8, caractérisé par le fait qu'une sortie de l'unité d'activation logique (CL) est rétrocouplée, par l'intermédiaire d'une onzième ligne d'instruction (EN1), avec une entrée de l'unité d'activation logique (CL), par le fait que l'unité d'activation logique (CL) est reliée, par l'intermédiaire d'une douzième (CACK) et d'une treizième lignes d'instruction (WREQ +), à l'unité de commande d'interruption et d'accès direct en mémoire DMA (ICC), par le fait que la ligne de signal de validation d'écriture (PWR) et la ligne de signal de validation de lecture (PRD) arrivent à l'unité d'action logique (CL), et par le fait que la onzième ligne d'instruction (EN1), ainsi qu'une première (EN4), une seconde (DIR4), une troisième (EN7), une quatrième (DIR7) et une cinquième (WRIST) lignes de signal logique, reliées aux sorties de l'unité d'activation logique (CL), forment des lignes de signal d'activation internes.

**10.** Dispositif d'interface selon les revendications 3, 5 et 6, caractérisé par le fait que la première ligne de signal de réinitialisation (PRES), la première ligne d'instruction (RESET) et un circuit de commutation de réinitialisation (GA3) sont reliés, par l'intermédiaire d'une porte logique (D16), avec l'unité de commande de sélection (SE) de façon telle que l'un des signaux de réinitialisation peut chaque fois être efficacement transmis.

FIG 1

14

FIG 2